# EUROPEAN PATENT APPLICATION

(11) **EP 2 400 765 A1**
(43) Date of publication of application: **28.12.2011**
(21) Application number: 10166742.6
(22) Date of filing: 22.06.2010
(51) Int. Cl.: H04N 13/00

(54) **Stereoscopic image capturing apparatus, method and computer program**

(71) Applicant: Sony Ericsson Mobile Communications AB, 221 88 Lund (SE)
(72) Inventor: Östlund, Petter, 226 48, LUND (SE)
(74) Representative: Schwarz, Markku

(57) **Abstract**

A stereoscopic image capturing apparatus comprising a first camera module arranged aligned with a first optical axis; a second camera module arranged aligned with a second optical axis and at a distance from the first camera module such that the first and second camera modules together are arranged for stereoscopic imaging; and a controller arranged to control mutual angle between the first and second optical axes such that the first and second optical axes intersect at a point of focus for the stereoscopic imaging is disclosed. A method for stereoscopic imaging and a computer program for implementing the method are also disclosed.

## Description

### Technical field

The present invention generally relates to an image capturing apparatus, a method and a computer program. In particular, the present invention relates to stereoscopic imaging.

### Background

Stereoscopic imaging can enhance imaging experience. The stereoscopic technique is usually based on two cameras separated by a distance, e.g. 63 mm which is assumed to be an average distance between human eyes. The optical axes should then intersect at some point, similar to the stereoscopic function of human eyes.

For achieving the desired stereoscopic experience, the arrangement for intersection between the optical axes needs to be designed properly. It is therefore a desire to provide such an arrangement.

### Summary

The present invention is based on the understanding that imaging capturing apparatuses are enabled to focus on different distances, and thus the inventor has realised that intersection of optical axes of cameras can be controlled based on focusing information.

According to a first aspect, there is provided an image capturing apparatus comprising a first camera module arranged aligned with a first optical axis; a second camera module arranged aligned with a second optical axis and at a distance from the first camera module such that the first and second camera modules together are arranged for stereoscopic imaging; and a controller arranged to control mutual angle between the first and second optical axes such that the first and second optical axes intersect at a point of focus for the stereoscopic imaging.

Any of the first and second camera modules may be arranged for automatic focusing, wherein the controller may control the intersection of the first and second optical axes to be at the distance of focus of the automatic focusing. Both of the first and second camera modules may be arranged for automatic focusing, wherein the one of the first and second camera modules may be arranged to work for slave focusing and the other of the first and second camera modules may be arranged to work for master focusing.

The controller may be arranged to perform pattern recognition of at least a part of respective of images captured by the first and second camera modules wherein the control of the mutual angle between the first and second optical axes is based on feedback information based on the pattern recognition such that the first and second optical axes intersect at a point of focus for the stereoscopic imaging when at least a part of patterns of the images captured by respective cameras match. The controller may be arranged to perform convolution of the at least part of respective images for recognising matching patterns.

The control of angle of any of the first and second optical axes may be performed by any of tilt or translation of any of a sensor or lens of respective camera modules or tilt of entire module. The tilt or translation may be performed by any of an electric motor or a piezo-electric actuator.

According to second aspect, there is provided a method of capturing stereoscopic images with an image capturing apparatus comprising a first camera module with a first optical axis and a second camera module with a second optical axis and at a distance from the first camera module such that the first and second camera modules together are arranged for stereoscopic imaging. The method comprises controlling mutual angle between the first and second optical axes such that the first and second optical axes intersect at a point of focus for the stereoscopic imaging.

The method may further comprise performing automatic focusing by one of the first and second camera modules; and controlling the intersection of the first and second optical axes to be at the distance of focus of the automatic focusing. The method may further comprise performing slave focusing by the other of the first and second camera modules, based on the focusing of the one of the first and second camera modules.

The method may further comprise performing pattern recognition of at least a part of respective of images captured by the first and second camera modules; and controlling the mutual angle between the first and second optical axes based on feedback information based on the pattern recognition such that the first and second optical axes intersect at a point of focus for the stereoscopic imaging when at least a part of patterns of the images captured by respective cameras match. The performing of pattern recognition may comprise performing convolution of the at least part of respective images for recognising matching patterns.

The controlling of angle of any of the first and second optical axes may comprise any of tilting or translating any of a sensor or lens of respective camera modules or tilting the entire module. The tilting or translating may be performed by any of an electric motor or a piezo-electric actuator.

According to a third aspect, there is provide a computer program comprising instructions which when executed on a processor of an image capturing apparatus cause the image capturing apparatus to perform the method according to the second aspect.

Other objectives, features and advantages of the present invention will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings.
Fig 1 schematically illustrates an image capturing apparatus according to an embodiment.
Figs 2 and 3 illustrate the principle of changing the intersection point of the optical axes.
Figs 4 to 8 illustrate different approaches for changing the direction of optical axis.
Fig. 9 is a flow chart illustrating a method of controlling the mutual angles of optical axes upon stereoscopic imaging according to an embodiment.
Fig. 10 schematically illustrates a computer readable medium and a processing device, wherein a computer program is stored on the computer readable medium, the computer program comprising instructions which when executed on the processor of an image capturing apparatus cause the image capturing apparatus to perform the method of Fig. 9.

### Detailed description of preferred embodiments

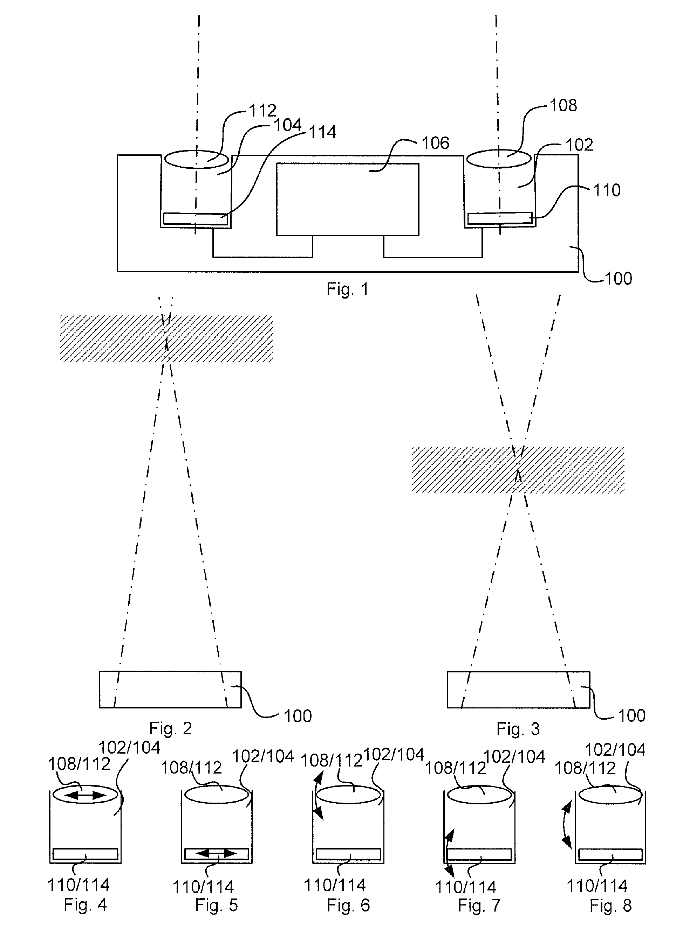

Fig. 1 schematically illustrates an image capturing apparatus 100, which may be a digital camera, or a mobile phone, personal digital assistant or other portable computing device with image capturing features. The image capturing apparatus 100 is enabled for stereographic imaging by its first and second camera modules 102, 104. Each camera module 102, 104 comprises a lens 108, 112 and an image sensor 110, 114. Here, the lens 108, 112 can be a single lens element or a lens system comprising two or more lens elements. At least one of the camera modules 102, 104 is enabled for focusing at different distances. The focusing is preferably working automatically, i.e. what is normally called autofocus and is implemented according to any of the well-known approaches in the field. If both the camera modules 102, 104 are autofocus enabled, preferably one of them works as a master and the other one as a slave, i.e. one has the autofocus operation and the other one follows in the focusing operations. Alternatively, one of the camera modules 102, 104 is of a fix focus type. Focusing is controlled by a controller 106 at least in sense that the controller is aware of focusing state from which a focusing distance can be derived or estimated from which a focus point is determined. The point of focus can be within the depth of field, which is also dependent on e.g. aperture and focal length which may differ if the lens for example is a zoom lens, although not being the optical focusing distance of the camera module. The selection of point of focus can be subject to different settings of the image capturing apparatus 100, e.g. to be at the optical distance of focusing, at a centre of the depth of field, at an estimated distance of focusing although the optical distance of focusing is set otherwise due to image capturing program settings, etc. From the selected point of focus, the optical axes, in Fig. 1 illustrated as dot-dashed lines, of the camera modules 102, 104 are controlled to intersect at the selected point of focus. This is performed by the controller 106 providing control signals to one or more actuators at one of both of the camera modules 102, 104. The actuation will be further described with reference to Figs 4 to 8 below. The mutual angles between the optical axes can be controlled by changing one of the axes or both. Further, pattern recognition of a part of respective image captured by the camera modules 102, 104 can be performed and the result thereof can be fed back for controlling the actuation. Also, the whole images can be subject to pattern recognition, e.g. by convoluting the images.
Figs 2 and 3 illustrate the principle of changing the intersection point of the optical axes. The focusing distance or depth of field is illustrated as the dashed field. The image capturing apparatus 100 is schematically illustrated as a box. The optical axes are illustrated as dot-dashed lines. In Fig. 2, the focus point is further away and therefore the optical axes are made to intersect at that distance. In Fig. 3, the focus point is closer by and the angles of the optical axes are changes such that they intersect at the closer distance. It should be noted that Figs 2 and 3 are not drawn to scale and that the angles are exaggerated to more clearly show the principle.
Figs 4 to 8 illustrate different approaches for changing the direction of optical axis. Two or more of these approaches can be used in combination to achieve the desired change. Fig. 4 illustrates translation, i.e. displacement essentially perpendicular to the optical axis, of the lens or one or more lenses of the lens system 108, 112. In photographic terms, this is often referred to as "shift". The lens displacement illustrated in Fig. 4 corresponds in effect to displacement of the sensor 110, 114 illustrated in Fig. 5. For the "displacement" illustrated in Fig. 5, no displacement is necessary. The same effect can be achieved by a shift of data of the image sensor 110, 114, which is feasible if not the entire image sensor area is used for the imaging. Fig. 6 illustrates a tilt of the lens or one or more lenses of the lens system 108, 112. In photographic terms, this is often referred to as "tilt". Fig. 7 illustrates a tilt of the image sensor 110, 114. Displacements in the shift and tilt operations can be made by electric motors or piezo-electric actuators. This is also feasible for the approach illustrated in Fig. 8 where the entire camera module 102, 104 is tilted. It should be noted that the tilting feature of the sensor, lens system or camera module can be part of or integrated with an image stabilization system, where these elements normally are actuated to compensate for unintentional movements of the image capturing apparatus. This implies that in such case, no significant additional hardware costs are present for the actuators.

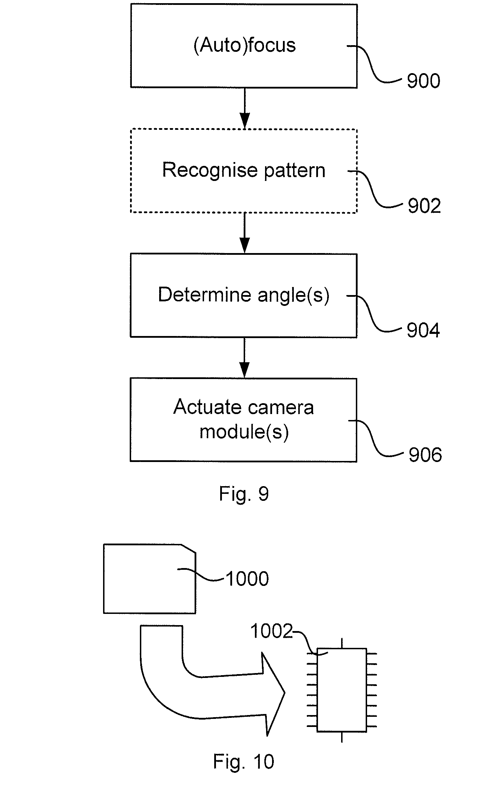

Fig. 9 is a flow chart schematically illustrating a method of controlling the mutual angles of optical axes upon stereoscopic imaging. In a focusing step 900, one or both camera modules as demonstrated above are focused towards a scene.

Optionally, pattern recognition is performed 902, as also demonstrated above, to feed back any necessary data for controlling the mutual angles. Here, although not depicted in the flow chart as any loops, pattern recognition and angle determination is preferably a feed-back system, i.e. an iterative process. A straightforward implementation would be to do pattern recognition, e.g. with convolution as discussed above, between viewfinder frames, i.e. captured images used for presenting the view of the camera to a user on a display of the image capturing apparatus, from the two cameras after the focus plane is found iteratively until an angle is found with desired accuracy. Since the viewfinder images are provided periodically at a high pace to actually provide the actual view, the iteration can be fast enough not to impact the use of the image capturing apparatus.

The angle is, in case only one camera module is actuated, or angles are, in case both of the camera modules are actuated, determined 904 such that the optical axes will intersect at a point of focus, as discussed above. From this, the camera module or modules are actuated 906 such that the optical axes reach the desired configuration. Here, the actuation of the camera modules can be according to any of the approaches demonstrated with reference to Figs 4 to 8, or any combination thereof as discussed with reference to these Figs.

Regarding the iterative process when using the optional pattern recognition 902, this can be considered to include looping of the steps 902, 904 and 906 until the mutual angle is found with a desired accuracy.

The methods according to the present invention is suitable for implementation with aid of processing means, such as computers and/or processors, especially since the case with all imaging apparatuses in question have such processing capabilities. Further especially, the feature of pattern recognition is particularly suitable to be performed in an Image Signal Processor (ISP) hardware or other dedicated hardware.

Therefore, there is provided computer programs, comprising instructions arranged to cause the processing means, processor, or computer to perform the steps of any of the methods according to any of the embodiments described with reference to Fig. 9. The computer programs preferably comprises program code which is stored on a computer readable medium 1000, as illustrated in Fig. 10, which can be loaded and executed by a processing means, processor, or computer 1002 to cause it to perform the methods, respectively, according to embodiments of the present invention, preferably as any of the embodiments described with reference to Fig. 9. The computer 1002 and computer program product 1000 can be arranged to execute the program code sequentially where actions of the any of the methods are performed stepwise. The processing means, processor, or computer 1002 is preferably what normally is referred to as an embedded system. Thus, the depicted computer readable medium 1000 and computer 1002 in Fig. 10 should be construed to be for illustrative purposes only to provide understanding of the principle, and not to be construed as any direct illustration of the elements.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. An image capturing apparatus comprising
a first camera module arranged aligned with a first optical axis;
a second camera module arranged aligned with a second optical axis and at a distance from the first camera module such that the first and second camera modules together are arranged for stereoscopic imaging; and
a controller arranged to control mutual angle between the first and second optical axes such that the first and second optical axes intersect at a point of focus for the stereoscopic imaging.

2. The image capturing apparatus according to claim 1, wherein any of the first and second camera modules are arranged for automatic focusing, wherein the controller controls the intersection of the first and second optical axes to be at the distance of focus of the automatic focusing.

3. The image capturing apparatus according to claim 3, wherein both of the first and second camera modules are arranged for automatic focusing, wherein one of the first and second camera modules is arranged to work for slave focusing and the other of the first and second camera modules is arranged to work for master focusing.

4. The image capturing apparatus according to any of claims 1 to 3, wherein the controller is arranged to perform pattern recognition of at least a part of respective of images captured by the first and second camera modules wherein the control of the mutual angle between the first and second optical axes is based on feedback of information based on the pattern recognition such that the first and second optical axes intersect at a point of focus for the stereoscopic imaging when at least a part of patterns of the images captured by respective cameras match.

5. The image capturing apparatus according to claim 4, wherein the controller is arranged to perform convolution of the at least part of respective images for recognising matching patterns.

6. The image capturing apparatus according to any of claims 1 to 5, wherein the control of angle of any of the first and second optical axes is performed by any of tilt or translation of any of a sensor or lens of respective camera modules or tilt of entire module.

7. The image capturing apparatus according to claim 6, wherein the tilt or translation is performed by any of an electric motor or a piezo-electric actuator.

8. A method of capturing stereoscopic images with an image capturing apparatus comprising a first camera module with a first optical axis and a second camera module with a second optical axis and at a distance from the first camera module such that the first and second camera modules together are arranged for stereoscopic imaging, the method comprising
controlling mutual angle between the first and second optical axes such that the first and second optical axes intersect at a point of focus for the stereoscopic imaging.

9. The method according to claim 8, further comprising
performing automatic focusing by one of the first and second camera modules; and
controlling the intersection of the first and second optical axes to be at the distance of focus of the automatic focusing.

10. The method according to claim 9, further comprising
performing slave focusing by the other of the first and second camera modules, based on the focusing of the one of the first and second camera modules.

11. The method according to any of claims 8 to 11, further comprising
performing pattern recognition of at least a part of respective of images captured by the first and second camera modules; and
controlling the mutual angle between the first and second optical axes based on feedback information based on the pattern recognition such that the first and second optical axes intersect at a point of focus for the stereoscopic imaging when at least a part of patterns of the images captured by respective cameras match.

12. The method according to claim 11, wherein the performing of pattern recognition comprises performing convolution of the at least part of respective images for recognising matching patterns.

13. The method according to any of claims 8 to 12, wherein the controlling of angle of any of the first and second optical axes comprises any of tilting or translating any of a sensor or lens of respective camera modules or tilting the entire module.

14. The method according to claim 13, wherein the tilting or translating is performed by any of an electric motor or a piezo-electric actuator.

15. A computer program comprising instructions which when executed on a processor of an image capturing apparatus cause the image capturing apparatus to perform the method according to any of claims 8 to 14.
